Europäisches Patentamt

European Patent Office

Office européen des brevets

(11) Publication number: **0 364 112**
**A2**

# (12) EUROPEAN PATENT APPLICATION

(21) Application number: 89309494.6

(51) Int. Cl.5: **G06F 3/023**

(22) Date of filing: **19.09.89**

(30) Priority: **14.10.88 US 258150**

(43) Date of publication of application:
**18.04.90 Bulletin 90/16**

(84) Designated Contracting States:
**DE FR GB IT NL**

(71) Applicant: **Compaq Computer Corporation**
**20555 S.H. 249**
**Houston Texas 77070(US)**

(72) Inventor: **Bushman, Douglas C.**
**13555 Breton Ridge No. 336**
**Houston Texas 77070(US)**

(74) Representative: **Brunner, Michael John et al**
**GILL JENNINGS & EVERY 53-64 Chancery**
**Lane**
**London WC2A 1HN(GB)**

(54) **Keyboard apparatus.**

(57) A new and unique embedded keypad is described which takes advantage of the number keys 7, 8 and 9 while providing a standard keypad arrangement for those with special proficiency in 10-key numeric keypads while at the same time providing cursor controls embedded in the embedded keypad, such special characters being implemented without a dedicated numeric keypad thereby reducing the physical space requirements for such features on a keyboard. The present invention relates to keyboard apparatus, necessary to accomplish a multitude of tasks, for a personal or portable computer without the incident physical space penalties associated with a prior art keyboard.

**FIG.1**

EP 0 364 112 A2

# KEYBOARD APPARATUS

This invention relates to personal and portable computers typically designed with a standard typewriter keyboard arrangement. More particularly, the present invention relates to a keyboard for a personal computer used to input data to be store and/or displayed on a computer.

With the advent of the computer it became necessary to provide for a standard input interface. The typewriter keyboard arrangement was selected for the computer keyboard arrangement with the exception of special function keys such as the dedicated keypad, control, alternate, special function keys (e.g. F1, F2, F3, etc.), escape, number lock, and other such keys which were never contemplated on a standard typewriter. With the advent of the computer keyboard and the adoption of typewriter keyboard arrangement, designers of computer keyboards have struggled to properly locate the additional keys necessary for proper operation of a keyboard. As the sophistication of the computer has grown, so have the number of keys necessary for proper operation of computers with enhanced functions.

The additional keys necessary for a computer keyboard were typically accommodated by increasing the size of the keyboard. The size of the keyboard grew as necessary to accommodate the additional keys without any discomfort to the typist or computer operator. The increase in keyboard size did not pose any deleterious consequences for desktop computers.

As the demand for portable computers, and consequently smaller computers has grown, the need to reduce the size of the keyboard without sacrificing the functionality achieved with the additional keys which the computer user has come to expect for the additional functionality of the computer. Thus the designers of computer keyboards were required to produce smaller keyboards while maintaining all of the functionality of previous keyboards.

In accordance with the present invention, there is disclosed a keyboard for a personal portable computer with embedded keys arranged in manner which yields the full functionality of a desk-top computer keyboard without the physical size normally associated with desktop computer keyboards. It is a further object of the present invention to provide a numeric keypad arrangement without incurring the physical size penalty normally associated with a dedicated numeric keypad while at the same time providing cursor control keys in the embedded keypad.

It is an object of the present invention to provide a keyboard for a small footprint portable computer which has full-sized keys and yet achieves the full-functionality of a full-size keyboard approximately twice its size. It is a further object of the present invention to arrange the keys on such keyboard in such a manner which is logical and advantageous to those who have specific skills which result in improved and more efficient use of the keyboard and consequently a computer.

It is a further object of the present invention to provide an accountant, bookkeeper and other persons who have number intensive keyboard entry operations with a means to avail themselves of a dedicated numeric keypad to allow them to use the skills which they develop in pursuit of their daily activities, on a keyboard which is compact in size. It is a further object of the present invention to embed a numeric keypad in a manner which can be readily used in number intensive operations without the need for a dedicated numeric keypad.

Figure 1 illustrates a computer keyboard including the embedded numeric keypad and cursor control keys;

Figure 2 illustrates a portion of the keyboard which is illustrated in Figure 1 in an effort to illustrate the arrangement of the embedded numeric keypad and cursor control keys in an enlarged fashion.

Figure 3 is a schematic of the connection interface illustrating the interface between the keyboard and the computer system; and

Figure 4 illustrates the keyboard with the key numbers alone indicated on the key caps, for cross-reference with Table 1 and Table 2.

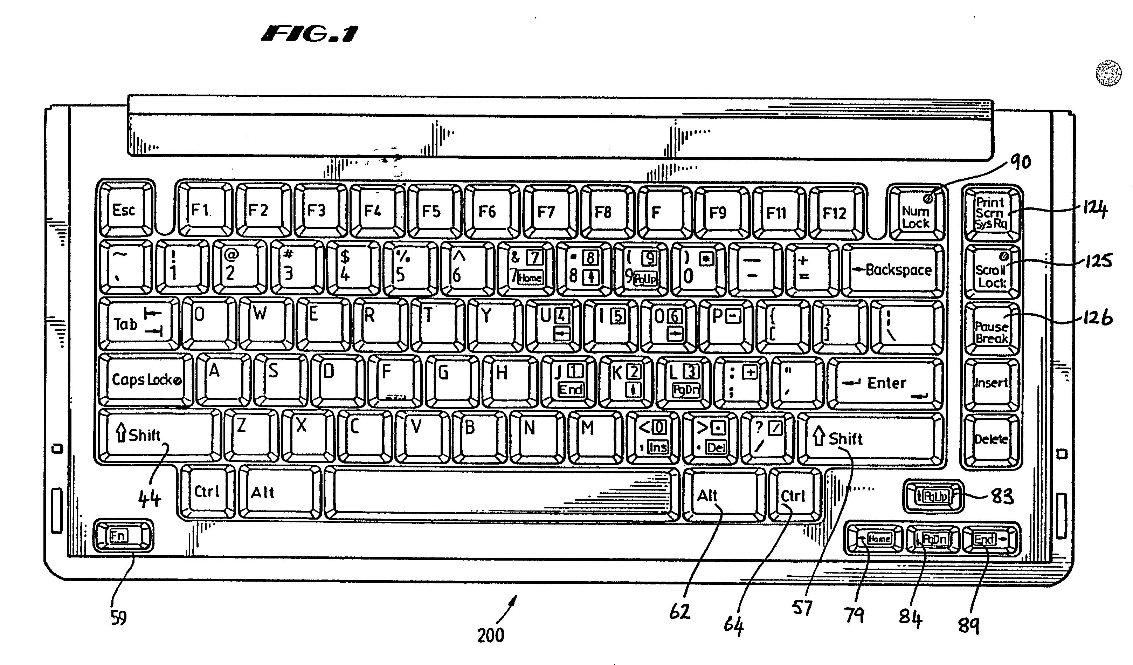

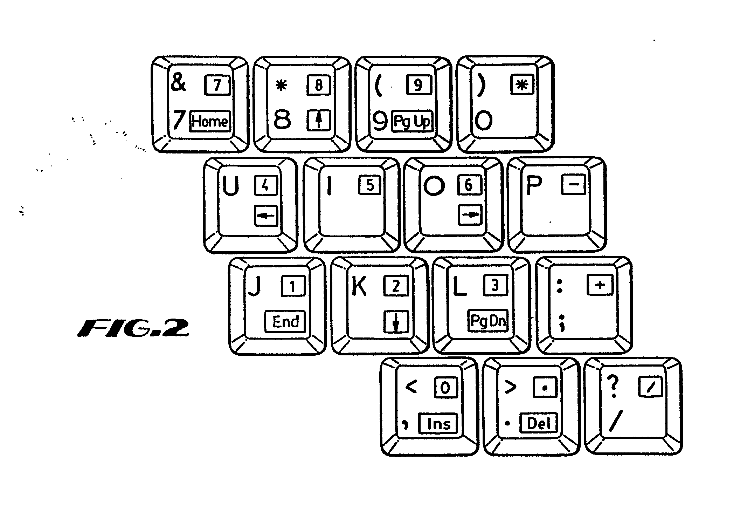

A new and unique numeric keypad arrangement is disclosed in the present invention. As illustrated in Figure 1 (and more particularly in Figure 2) the keys of keyboard 200 are arranged in the second, third, fourth and fifth rows to provide keys which serve up to four separate and distinct functions. For example number keys for the numerals 7, 8, and 9 operate in the normal keyboard operation for the numbers 7, 8 and 9. Whenever the "Shift" key 44 or 57 is depressed the keys 7, 8, and 9 operate in the normal manner as in a typewriter to wit to yield the "&", "*", "(" characters respectively. Other character and number keys on the keyboard behave in a similar fashion as those keys found on a standard typewriter or prior art computer keyboard.

The number keys and the keys in the embedded keypad (shown in Figure 2) have two additional features however depending on whether the "Num Lock" key 90 is depressed and/or the Fn key 59 is

2

depressed. By depressing a combination of the Num Lock key 90 and/or the Fn key 59 the cursor control keys in the embedded keyboard are utilized or the numeral keys are utilized. The various functions for the embedded keys are illustrated in Figure 2.

In the case of the numbers 7, 8 and 9 the numbers yielded when the Num Lock key 90 is depressed are the numbers 7, 8 and 9 respectively. However, in the case of the letters and characters u, i, o, p, j, k, l, and other keys illustrated in Figure 2; the arrangement of the underlying embedded keys resembles a standard numeric keypad of the type commonly associated with an adding machine or calculator.

The present keyboard 200 has two modes of operation; normal and select. The default mode at computer system power-up shall be the normal mode. Enhanced operation will be available in the normal mode. A "Function" key 59, additional to the twelve standard function keys, and designated as "Fn" will provide access to the embedded numeric keys and cursor/screen control keys. Each mode is more specifically described below.

In the normal mode, an 11-bit scan code for bidirectional communication between keyboard and system unit is used. Each key has an individual make code and break code. The break code is transmitted after the key is released. These codes are jointly referred to as the scan code. Normal mode scan codes are listed in Table 1 attached.

The select mode also uses an 11-bit bi-directional interface and the default scan codes are listed in Table 2. The select mode is system selectable via software and allows any individual key or all keys to be re-assigned to one of the following states:
- Make only operation
- Make/Break operation
- Typematic only operation
- Typematic and Make/Break operation

The keyboard will be uniquely configured to emulate enhanced operation; i.e. QWERTY, Numeric Pad and Cursor Control Keys. This is accomplished by an embedded numeric pad and separate cursor keys as illustrated in Figure 2. the embedded numeric pad is enabled/disabled via the Num Lock key 90. When enables, embedded numeric keys illustrated in Figure 2, will transmit the key codes of an enhanced numeric pad provided the optional keypad (not shown in Figure 1) is not attached to the back of the keyboard. When the optional keypad is attached, the embedded numeric pad is disabled via the keyboard, and the embedded numeric keys (more fully illustrated in Figure 2) will normally transmit alpha codes - regardless of the state of the Num Lock key 90.

Dedicated cursor control keys 79, 83, 84, and 89 always transmit enhanced codes regardless of the state of Num Lock 90 or the presence of the optional keypad.

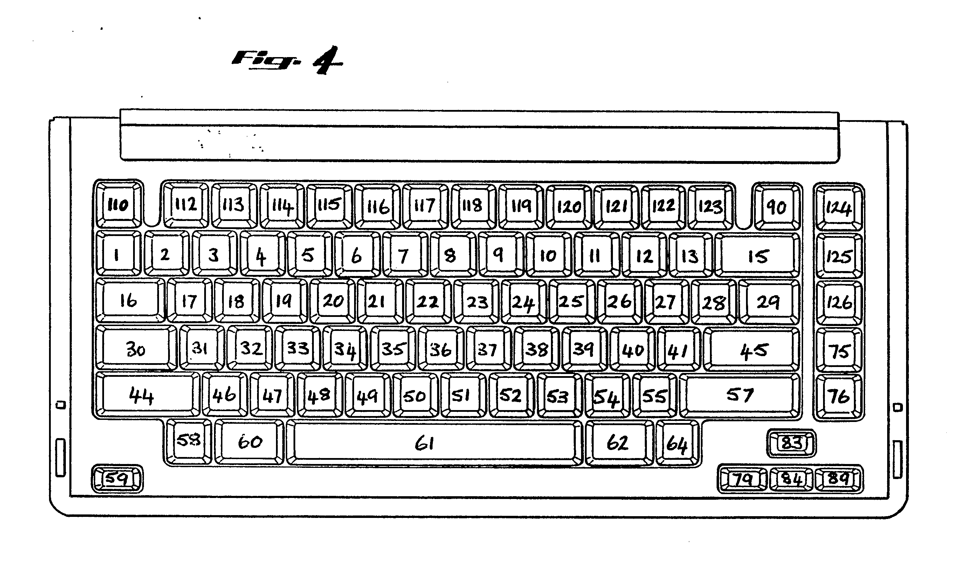

In addition to the above-mentioned keys, the following key stations also transmit enhanced codes: 62, 64, 124, 125, 126. The key codes are designated on the key caps in Figure 4.

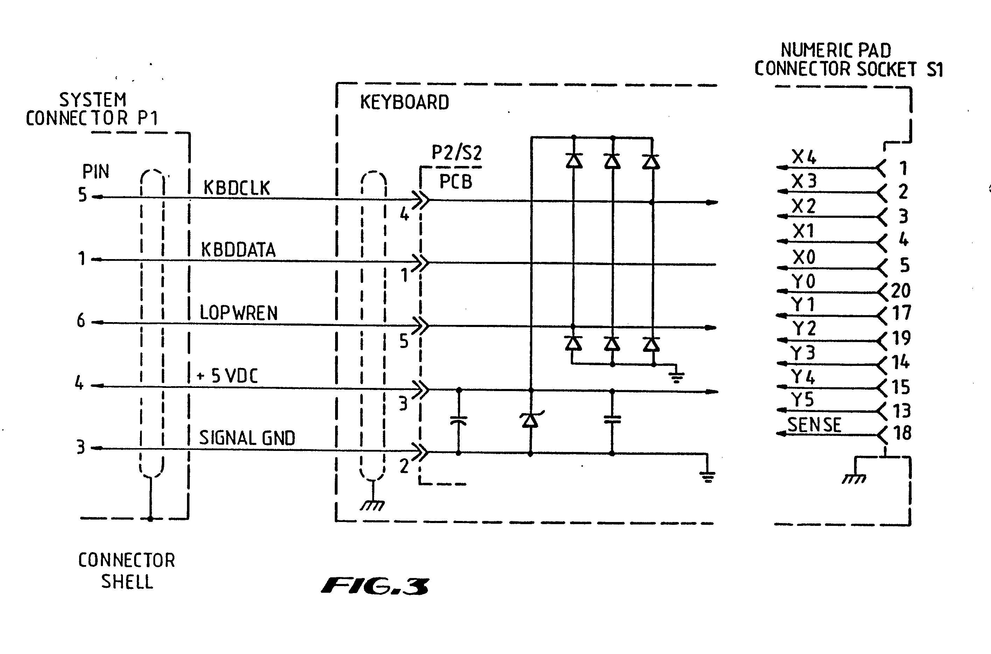

The Num Lock 90 key provides access to the embedded numeric keys illustrated in Figure 1 (more fully illustrated in Figure 2) provided that the optional keypad (not shown) is not attached. The SENSE line (see Figure 3) detects the presence of the optional keypad. If the keypad is attached, the status of the Num Lock key LED (light emitting diode not shown) determines if scan codes from the embedded keypad are interpreted by the keyboard system as digits or cursor/screen control functions.

Operation of the Fn key 59 is unique; its only purpose is to flag the keyboard processor. No codes are sent across the system interface. The operation of Fn 59 depends on the state of the Num Lock Key:
- With Num Lock off (LED off), the operation of Fn 59 and an embedded numeric key together transmits the enhanced numeric scan code of a key, or the screen control code of the cursor keys.
- With Num Lock on (LED on), operation Fn and an embedded numeric key transmits the default (alpha) scan code of a key or the screen control code of the cursor keys.

All scan codes accessed via Fn 59 will send complete make/break codes. For example, if Fn is released while an embedded numeric key is still pressed, the break code of the embedded character must be transmitted before any subsequent made code is sent. This will occur regardless of the state of the Num Lock or keypad presence.

The following matrix describes the combined effects of the optional keypad, Fn key 59 and Num Lock key 90. Embedded numeric keys in the QWERTY section are distinguished by shell coloured legends in a solid black quadrant, or by a black boxed legend, however these colors should not be viewed as a limitation of the invention.

|  | Num Lock ON | Num Lock OFF |
|---|---|---|
| Keypad Installed | Embedded Numerics - Disabled<br>Keypad Numerics - Enabled<br>Keyboard<br>Cursor controls - Functional<br>Screen control - via Fn | Keypad Numerics - Disabled<br>Embedded Numerics - Disabled<br>Keyboard<br>Cursor controls - Functional<br>Screen control - via Fn |
| Keypad Not Installed | Embedded Numerics - Enabled<br>Hold Down Fn key for Alpha functions<br>Cursor controls - Functional<br>Screen control - via Fn | Alpha functions - Enabled<br>Hold Down Fn key for Numeric functions<br>Cursor control - Functional<br>Screen control - via Fn |

As illustrated in the attached Figures and described above, a new and unique embedded keypad has been invented which takes advantage of the number keys 7, 8 and 9 while providing a standard keypad arrangement for those with special proficiency in 10-key numeric keypads while at the same time provide cursor controls embedded in the embedded keypad.

## TABLE 1   NORMAL MODE SCAN CODES
### (Page 1 of 7)

| KEY NUMBER | KEY CAP COLOR | MAKE CODE | BREAK CODE |
|---|---|---|---|
| 1 | 2 | 0E | F0 0E |
| 2 | 2 | 16 | F0 16 |
| 3 | 2 | 1E | F0 1E |
| 4 | 2 | 26 | F0 26 |
| 5 | 2 | 25 | F0 25 |
| 6 | 2 | 2E | F0 2E |
| 7 | 2 | 36 | F0 36 |
| 8 | 2 | 3D | F0 3D |
| 9 | 2 | 3E | F0 3E |
| 10 | 2 | 46 | F0 46 |
| 11 | 2 | 45 | F0 45 |
| 12 | 2 | 4E | F0 4E |
| 13 | 2 | 55 | F0 55 |
| # 14 | 1 | 6A | F0 6A |
| 15 | 1 | 66 | F0 66 |
| 16 | 1 | 0D | F0 0D |
| 17 | 2 | 15 | F0 15 |
| 18 | 2 | 1D | F0 1D |
| 19 | 2 | 24 | F0 24 |
| 20 | 2 | 2D | F0 2D |
| 21 | 2 | 2C | F0 2C |
| 22 | 2 | 35 | F0 35 |
| 23 | 2 | 3C | F0 3C |
| 24 | 2 | 43 | F0 43 |
| 25 | 2 | 44 | F0 44 |
| 26 | 2 | 4D | F0 4D |
| 27 | 2 | 54 | F0 54 |
| 28 | 2 | 5B | F0 5B |
| 29* | 2 | 5D | F0 5D |
| 30 | 1 | 58 | F0 58 |
| 31 | 2 | 1C | F0 1C |

* = U.S.A.    ** = International    # = Reserved

These keys are located on    80 81 85 86 91 92 93 94
the optional numeric pad:    95 96 97 98 99 100 101
                             102 103 104 105 106 108

These (cursor) keys are duplicated
on the optional numeric pad        79 83 84 89

## TABLE 1  NORMAL MODE KEY SCAN CODES
### (Page 2 of 7)

| KEY NUMBER | KEY CAP COLOR | MAKE CODE | BREAK CODE |
|---|---|---|---|
| 32 | 2 | 1B | FO 1B |
| 33 | 2 | 23 | FO 23 |
| 34 | 2 | 2B | FO 2B |
| 35 | 2 | 34 | FO 34 |
| 36 | 2 | 33 | FO 33 |
| 37 | 2 | 3B | FO 3B |
| 38 | 2 | 42 | FO 42 |
| 39 | 2 | 4B | FO 4B |
| 40 | 2 | 4C | FO 4C |
| 41 | 2 | 52 | FO 52 |
| 42** | 2 | 5D | FO 5D |
| 43 | 1 | 5A | FO 5A |
| 44 | 1 | 12 | FO 12 |
| 45** | 2 | 61 | FO 61 |
| 46 | 2 | 1A | FO 1A |
| 47 | 2 | 22 | FO 22 |
| 48 | 2 | 21 | FO 21 |
| 49 | 2 | 2A | FO 2A |
| 50 | 2 | 32 | FO 32 |
| 51 | 2 | 31 | FO 31 |
| 52 | 2 | 3A | FO 3A |
| 53 | 2 | 41 | FO 41 |
| 54 | 2 | 49 | FO 49 |
| 55 | 2 | 4A | FO 4A |
| # 56 | 1 | 51 | FO 51 |
| 57 | 1 | 59 | FO 59 |
| 58 | 1 | 14 | FO 14 |
| 59 | 1 | No scan code out to interface | |
| 60 | 1 | 11 | FO 11 |
| 61 | 2 | 29 | FO 29 |
| 62 | 1 | EO 11 | EO FO 11 |
| 64 | 1 | EO 14 | EO FO 14 |

* = U.S.A.     ** = International     # = Reserved

## TABLE 1 NORMAL MODE SCAN CODES
### (Page 3 of 7)

| KEY NUMBER | | KEY CAP COLOR | MAKE CODE | BREAK CODE |
|---|---|---|---|---|
| 75....90................see pages 5, 6 & 7 of 7 | | | | |
| 90 | | 1 | 77 | F0 77 |
| 91 | + | 2 | 6C | F0 6C |
| 92 | + | 2 | 6B | F0 6B |
| 93 | + | 2 | 69 | F0 69 |
| # 94 | + | 2 | 68 | F0 68 |
| 95 | + | 2 | see pages 5 & 6 of 7 | |
| 96 | + | 2 | 75 | F0 75 |
| 97 | + | 2 | 73 | F0 73 |
| 98 | + | 2 | 72 | F0 72 |
| 99 | + | 2 | 70 | F0 70 |
| 100 | + | 1 | 7C | F0 7C |
| 101 | + | 2 | 7D | F0 7D |
| 102 | + | 2 | 74 | F0 74 |
| 103 | + | 2 | 7A | F0 7A |
| 104 | + | 2 | 71 | F0 71 |
| 105 | + | 1 | 7B | F0 7B |
| 106 | + | 1 | 79 | F0 79 |
| # 107 | + | 1 | 6D | F0 6D |
| 108 | + | 1 | E0 5A | E0 F0 5A |
| # 109 | + | 1 | 63 | F0 63 |
| 110 | | 1 | 76 | F0 76 |
| 112 | | 1 | 05 | F0 05 |
| 113 | | 1 | 06 | F0 06 |
| 114 | | 1 | 04 | F0 04 |
| 115 | | 1 | 0C | F0 0C |
| 116 | | 1 | 03 | F0 03 |
| 117 | | 1 | 0B | F0 0B |
| 118 | | 1 | 83 | F0 83 |
| 119 | | 1 | 0A | F0 0A |
| 120 | | 1 | 01 | F0 01 |
| 121 | | 1 | 09 | F0 09 |
| 122 | | 1 | 78 | F0 78 |
| 123 | | 1 | 07 | F0 07 |
| 125 | | 1 | 7E | F0 7E |

* = U.S.A.        ** = International        # = Reserved
+ = on Numeric keypad

TABLE 1   NORMAL MODE SCAN CODES
(Page 4 of 7)

| KEY NO. | KEY CAP COLOR | BASE CASE,or Shift+Num Lock MAKE / BREAK | Shift case (see note below) MAKE / BREAK | Num Lock ON MAKE / BREAK |
|---|---|---|---|---|
| 75 | 1 | EO 70 / EO FO 70 | EO FO 12 EO 70/ EO FO 70 EO 12 | EO 12 EO 70/ EO FO 70 EO FO 12 |
| 76 | 1 | EO 71 / EO FO 71 | EO FO 12 EO 71/ EO FO 71 EO 12 | EO 12 EO 71/ EO FO 71 EO FO 12 |
| 79 + | 1 | EO 6B / EO FO 6B | EO FO 12 EO 6B/ EO FO 6B EO 12 | EO 12 EO 6B/ EO FO 6B EO FO 12 |
| 80 + | 1 | EO 6C / EO FO 6C | EO FO 12 EO 6C/ EO FO 6C EO 12 | EO 12 EO 6C/ EO FO 6C EO FO 12 |
| 81 + | 1 | EO 69 / EO FO 69 | EO FO 12 EO 69/ EO FO 69 EO 12 | EO 12 EO 69/ EO FO 69 EO FO 12 |
| 83 + | 1 | EO 75 / EO FO 75 | EO FO 12 EO 75/ EO FO 75 EO 12 | EO 12 EO 75/ EO FO 75 EO FO 12 |
| 84 + | 1 | EO 72 / EO FO 72 | EO FO 12 EO 72/ EO FO 72 EO 12 | EO 12 EO 72/ EO FO 72 EO FO 12 |
| 85 + | 1 | EO 7D / EO FO 7D | EO FO 12 EO 7D/ EO FO 7D EO 12 | EO 12 EO 7D/ EO FO 7D EO FO 12 |
| 86 + | 1 | EO 7A / EO FO 7A | EO FO 12 EO 7A/ EO FO 7A EO 12 | EO 12 EO 7A/ EO FO 7A EO FO 12 |
| 89 + | 1 | EO 74 / EO FO 74 | EO FO 12 EO 74/ EO FO 74 EO 12 | EO 12 EO 74/ EO FO 74 EO FO 12 |
| | | BASE CASE MAKE/BREAK | SHIFT CASE MAKE/BREAK | |
| 95 + | 1 | EO 4A / EO FO 4A | EO FO 12 EO 4A/ EO FO 4A EO 12 | |

Note:
IF SHIFT KEY 44 IS DOWN, THE  FO 12/12  MAKE/BREAK IS SENT WITH
THE OTHER SCAN CODES.  WHEN SHIFT KEY 57 IS DOWN, THE FO 59/59
IS TRANSMITTED.  WHEN BOTH SHIFT KEYS ARE DOWN, BOTH SETS OF
MAKE/BREAK CODES ARE TRANSMITTED WITH THE KEY SCAN CODE.

+ = on Numeric keypad

### TABLE 1 NORMAL MODE.SCAN CODES
#### (Page 5 of 7)

| KEY NUMBER | KEY CAP COLOR | BASE CASE MAKE/BREAK | <Ctrl + Shift> MAKE / BREAK | < Alt > MAKE/BREAK |
|---|---|---|---|---|
| 124 | 1 | EO 12 EO 7C/ EO FO 7C EO FO 12 | EO 7C / EO FO 7C | 84 /FO 84 |

| | | NORMAL MAKE CODE | <Ctrl> KEY PRESSED |
|---|---|---|---|
| 126 | 1 | E1 14 77 E1 FO 14 FO 77 | EO 7E EO FO 7E |

KEY 126 IS NOT TYPEMATIC, ALL SCAN CODES OF ASSOCIATED KEYS OCCUR ON THE "MAKE" OF THE KEY.

| KEY STATION NUMBER | TYPEMATIC MAKE CODE | TYPEMATIC BREAK CODE |
|---|---|---|
| 75 | EO 70 | |
| 76 | EO 71 | SEE PAGE 4 |
| 79 | EO 6B | OF THIS TABLE |
| 80 | EO 6C | FOR THE BREAK |
| 81 | EO 69 | CODES FOR EACH |
| 83 | EO 75 | KEY CONDITION |
| 84 | EO 72 | |
| 85 | EO 7D | |
| 86 | EO 7A | |
| 89 | EO 74 | |
| 95 | EO 4A | |
| 124 | EO 7C | |
| 124 (Base Case + Alt) | 84 | |

TABLE 1 NORMAL MODE SCAN CODES
(PAGE 6 of 7)

There are two conditions that require the shift break code transmitted before the second keystation make scan code.

Condition 1 - Enhanced keystation pressed in combination with either shift key and any third keystation.

Condition 2 - Num Lock enabled, Enhanced keystation pressed and any second keystation pressed.

If one of the following Enhanced keystations is pressed, the keyboard transmits the first half of the BREAK scan code for the first station (break code for the shift) as shown below.

The keyboard then transmits the second station MAKE scan code.

On release of the first station the keyboard will transmit the remaining BREAK scan code for the first station pressed.

Normal keyboard operations continue after the second station MAKE scan code is transmitted.

| KEY NO. | CONDITION 1 Left-Shift Key | Right-Shift Key | CONDITION 2 Num Lock ON |
|---|---|---|---|
| 75 | EO 12 | EO 59 | EO FO 12 |
| 76 | EO 12 | EO 59 | EO FO 12 |
| 79 | EO 12 | EO 59 | EO FO 12 |
| 80 | EO 12 | EO 59 | EO FO 12 |
| 81 | EO 12 | EO 59 | EO FO 12 |
| 83 | EO 12 | EO 59 | EO FO 12 |
| 84 | EO 12 | EO 59 | EO FO 12 |
| 85 | EO 12 | EO 59 | EO FO 12 |
| 86 | EO 12 | EO 59 | EO FO 12 |
| 89 | EO 12 | EO 59 | EO FO 12 |
| 95 | EO 12 | EO 59 | ----- |
| 124 | ----- | ---- | EO FO 12 |

## TABLE 1  NORMAL MODE SCAN CODES
### (Page 7 of 7)

| Key No. | Num Lock (ON) or Fn + Num Lock(OFF) MAKE / BREAK | Fn + Num Lock (ON) MAKE / BREAK |
|---|---|---|
| 8 | 6C / F0 6C | 3D / F0 3D |
| 9 | 75 / F0 75 | 3E / F0 3E |
| 10 | 7D / F0 7D | 46 / F0 46 |
| 11 | 7C / F0 7C | 45 / F0 45 |
| 23 | 6B / F0 6B | 3C / F0 3C |
| 24 | 73 / F0 73 | 43 / F0 43 |
| 25 | 74 / F0 74 | 44 / F0 44 |
| 26 | 7B / F0 7B | 4D / F0 4D |
| 37 | 69 / F0 69 | 3B / F0 3B |
| 38 | 72 / F0 72 | 42 / F0 42 |
| 39 | 7A / F0 7A | 4B / F0 4B |
| 40 | 79 / F0 79 | 4C / F0 4C |
| 43 | E0 5A / E0 F0 5A | 5A / F0 5A |
| 53 | 70 / F0 70 | 3A / F0 3A |
| 54 | 71 / F0 71 | 41 / F0 41 |
| 55 | E0 4A / E0 F0 4A | 4A / F0 4A |

| CURSOR KEYS | Num Lock ON | | Num Lock OFF | |
|---|---|---|---|---|
| | BASE CASE MAKE / BREAK | Fn + CURSOR MAKE / BREAK | BASE CASE MAKE/BREAK | Fn + CURSOR |
| ↖ 79 | E0 12 E0 6B / E0 F0 6B E0 F0 12 | E0 12 E0 6C / E0 F0 6C E0 F0 12 | E0 6B / E0 F0 6B | E0 6C / E0 F0 6C |
| ↑ 83 | E0 12 E0 75 / E0 F0 75 E0 F0 12 | E0 12 E0 7D / E0 F0 7D E0 F0 12 | E0 75 / E0 F0 75 | E0 7D / E0 F0 7D |
| ↓ 84 | E0 12 E0 72 / E0 F0 72 E0 F0 12 | E0 12 E0 7A / E0 F0 7A E0 F0 12 | E0 72 / E0 F0 72 | E0 7A / E0 F0 7A |
| → 89 | E0 12 E0 74 / E0 F0 74 E0 F0 12 | E0 12 E0 69 / E0 F0 69 E0 F0 12 | E0 74 / E0 F0 74 | E0 69 / E0 F0 69 |

<u>NOTE:</u>

The "SHIFT CASE" for keys 43, 55, 79, 83, 84, and 89 will conform to the scan code transmission sequence on pages 4 and 6 of this table

TABLE 2   SELECT MODE SCAN CODES
(Page 1 of 4)

| KEY NUMBER | MAKE CODE | BREAK CODE | DEFAULT KEY STATE |
|---|---|---|---|
| 1 | 0E | F0 0E | TYPEMATIC |
| 2 | 16 | F0 16 | " |
| 3 | 1E | F0 1E | " |
| 4 | 26 | F0 26 | " |
| 5 | 25 | F0 25 | " |
| 6 | 2E | F0 2E | " |
| 7 | 36 | F0 36 | " |
| 8 | 3D | F0 3D | " |
| 9 | 3E | F0 3E | " |
| 10 | 46 | F0 46 | " |
| 11 | 45 | F0 45 | " |
| 12 | 4E | F0 4E | |
| 13 | 55 | F0 55 | " |
| # 14 | 5D | F0 5D | " |
| 15 | 66 | F0 66 | " |
| 16 | 0D | F0 0D | " |
| 17 | 15 | F0 15 | " |
| 18 | 1D | F0 1D | " |
| 19 | 24 | F0 24 | " |
| 20 | 2D | F0 2D | " |
| 21 | 2C | F0 2C | " |
| 22 | 35 | F0 35 | " |
| 23 | 3C | F0 3C | " |
| 24 | 43 | F0 43 | " |
| 25 | 44 | F0 44 | " |
| 26 | 4D | F0 4D | " |
| 27 | 54 | F0 54 | " |
| 28 | 5B | F0 5B | " |
| 29* | 5C | F0 5C | " |
| 30 | 14 | F0 14 | MAKE/BREAK |
| 31 | 1C | F0 1C | TYPEMATIC |
| 32 | 1B | F0 1B | " |
| 33 | 23 | F0 23 | " |
| 34 | 2B | F0 2B | " |
| 35 | 34 | F0 34 | " |
| 36 | 33 | F0 33 | " |
| 37 | 3B | F0 3B | " |
| 38 | 42 | F0 42 | " |
| 39 | 4B | F0 4B | " |
| 40 | 4C | F0 4C | " |

* = U.S.A.   ** = International   # = Reserved

These keys are located on     80  81  85  86  91  92  93  94  95  96  97
the optional numeric pad:     98  99  100  102  103  104  105  106  107  108  109

These (cursor) keys are duplicated on the optional numeric pad:  79, 83, 84, 85

## TABLE 2  SELECT MODE SCAN CODES
### (Page 2 of 4)

| KEY NUMBER | MAKE CODE | BREAK CODE | DEFAULT KEY STATE |
|---|---|---|---|
| 41 | 52 | F0 52 | TYPEMATIC |
| 42** | 53 | F0 53 | " |
| 43 | 5A | F0 5A | " |
| 44 | 12 | F0 12 | MAKE/BREAK |
| 45** | 13 | F0 13 | TYPEMATIC |
| 46 | 1A | F0 1A | " |
| 47 | 22 | F0 22 | " |
| 48 | 21 | F0 21 | " |
| 49 | 2A | F0 2A | " |
| 50 | 32 | F0 32 | " |
| 51 | 31 | F0 31 | " |
| 52 | 3A | F0 3A | " |
| 53 | 41 | F0 41 | " |
| 54 | 49 | F0 49 | " |
| 55 | 4A | F0 4A | " |
| # 56 | 51 | F0 51 | " |
| 57 | 59 | F0 59 | MAKE/BREAK |
| 58 | 11 | F0 11 | " |
| 59 | No scan code out to interface | | " |
| 60* | 19 | F0 19 | TYPEMATIC |
| 61 | 29 | F0 29 | TYPEMATIC |
| 62 | 39 | F0 39 | MAKE ONLY |
| 64 | 58 | F0 58 | " |
| 75 | 67 | F0 67 | " |
| 76 | 64 | F0 64 | TYPEMATIC |
| 79 + | 61 | F0 61 | " |
| 80 + | 6E | F0 6E | MAKE ONLY |
| 81 + | 65 | F0 65 | " |
| 83 + | 63 | F0 63 | TYPEMATIC |
| 84 + | 60 | F0 60 | " |
| 85 + | 6F | F0 6F | MAKE ONLY |
| 86 + | 6D | F0 6D | " |
| 89 + | 6A | F0 6A | TYPEMATIC |
| 90 | 76 | F0 76 | MAKE ONLY |
| 91 + | 6C | F0 6C | " |
| 92 + | 6B | F0 6B | " |
| 93 + | 69 | F0 69 | " |
| # 94 + | 68 | F0 68 | " |
| 95 + | 77 | F0 77 | " |
| 96 + | 75 | F0 75 | " |
| 97 + | 73 | F0 73 | " |
| 98 + | 72 | F0 72 | " |
| 99 + | 70 | F0 70 | " |

\* = U.S.A.  \*\* = International  # = Reserved

13

TABLE 2   SELECT MODE SCAN CODES
(Page 3 of 4)

| KEY NUMBER | MAKE CODE | BREAK CODE | DEFAULT KEY STATE |
|---|---|---|---|
| 100 + | 7E | F0 7E | MAKE ONLY |
| 101 + | 7D | F0 7D | " |
| 102 + | 74 | F0 74 | " |
| 103 + | 7A | F0 7A | " |
| 104 + | 71 | F0 71 | " |
| 105 + | 84 | F0 84 | " |
| 106 + | 7C | F0 7C | TYPEMATIC |
| #107 + | 7B | F0 7B | " |
| 108 + | 79 | F0 79 | MAKE ONLY |
| #109 + | 78 | F0 78 | " |
| 110 | 08 | F0 08 | " |
| 111 | 07 | F0 07 | " |
| 113 | 0F | F0 0F | " |
| 114 | 17 | F0 17 | " |
| 115 | 1F | F0 1F | " |
| 116 | 27 | F0 27 | " |
| 117 | 2F | F0 2F | " |
| 118 | 37 | F0 37 | " |
| 119 | 3F | F0 3F. | " |
| 120 | 47 | F0 47 | " |
| 121 | 4F | F0 4F | " |
| 122 | 56 | F0 56 | " |
| 123 | 5E | F0 5E | " |
| 124 | 57 | F0 57 | " |
| 125 | 5F | F0 5F | " |
| 126 | 62 | F0 62 | " |

* = U.S.A.   ** = International   # = Reserved
+ = on Numeric keypad

## TABLE 2  SELECT MODE SCAN CODES
### (Page 4 of 4)

| Key # | Num Lock (ON) or Fn + Num Lock (OFF) MAKE / BREAK | DEFAULT STATE | Fn + Num Lock (ON) MAKE / BREAK | DEFAULT STATE |
|---|---|---|---|---|
| 8 | 6C / F0 6C | make only | 3D / F0 3D | typematic |
| 9 | 75 / F0 75 | " | 3E / F0 3E | " |
| 10 | 7D / F0 7D | " | 46 / F0 46 | " |
| 11 | 7E / F0 7E | " | 45 / F0 45 | " |
| 23 | 6B / F0 6B | " | 3C / F0 3C | " |
| 24 | 73 / F0 73 | " | 43 / F0 43 | " |
| 25 | 74 / F0 74 | " | 44 / F0 44 | " |
| 26 | 84 / F0 84 | " | 4D / F0 4D | " |
| 37 | 69 / F0 69 | " | 3B / F0 3B | " |
| 38 | 72 / F0 72 | " | 42 / F0 42 | " |
| 39 | 7A / F0 7A | " | 4B / F0 4B | " |
| 40 | 7C / F0 7C | typematic | 4C / F0 4C | " |
| 43 | 79 / F0 79 | make only | 5A / F0 5A | " |
| 53 | 70 / F0 70 | " | 41 / F0 41 | " |
| 54 | 71 / F0 71 | " | 49 / F0 49 | " |
| 55 | 77 / F0 77 | " | 4A / F0 4A | " |

Fn + Num Lock ON or OFF

| Key # | MAKE / BREAK | | |
|---|---|---|---|
| 79 | 6E / F0 6E | make only | Cursor key |
| 83 | 6F / F0 6F | " | Cursor key |
| 84 | 6D / F0 6D | " | Cursor key |
| 89 | 65 / F0 65 | " | Cursor key |

## Claims

1. A keyboard (200) for a computer system comprising the following:
   a) a standard typewriter keyboard arrangement with lower case and upper case letter capabilities.
   b) cursor control keys embedded in said keyboard arrangement, and
   c) a numeric keypad embedded in said keyboard arrangement.

2. A keyboard according to claim 1, further comprising a special function key (59) which enables the embedded cursor control keys and disables the standard keyboard arrangement and the embedded numeric keys.

3. A keyboard according to claim 1 or claim 2, further comprising a Num Lock key (90) which enables the embedded numeric keypad and disables the standard keyboard arrangement and the cursor control keys.

FIG.1

EP 0 364 112 A2

FIG.2

EP 0 364 112 A2

FIG.3

Fig. 4

EP 0 364 112 A2